# EUROPÄISCHE PATENTSCHRIFT

(11) **EP 3 719 373 B1**
(45) Veröffentlichungstag und Bekanntmachung des Hinweises auf die Patenterteilung: **12.04.2023**
(21) Anmeldenummer: 20161299.1
(22) Anmeldetag: 05.03.2020
(51) Int. Cl.: F16L 25/06, F16L 37/14

(54) **VERBINDUNGSANORDNUNG, VORZUGSWEISE FÜR EINE FLUIDLEITUNG EINES FAHRZEUGS**
CONNECTION ARRANGEMENT, PREFERABLY FOR A FLUID LINE OF A VEHICLE
AGENCEMENT DE RACCORDEMENT, DE PRÉFÉRENCE POUR UNE CONDUITE DE FLUIDE D'UN VÉHICULE

(30) Priorität: 03.04.2019 DE 102019108744
(43) Veröffentlichungstag der Anmeldung: 07.10.2020
(73) Patentinhaber: Fränkische Industrial Pipes GmbH & Co. KG, 97486 Königsberg (DE); Bayerische Motoren Werke Aktiengesellschaft, 80809 München (DE)
(72) Erfinder: Ströse, Jörg, 85614 Eglharting (DE)
(74) Vertreter: Rothkopf, Ferdinand

(56) Entgegenhaltungen:
- EP-A1- 2 613 073
- WO-A1-2009/103995
- DE-B3-102017 108 201

## Beschreibung

Die Erfindung betrifft eine Verbindungsanordnung, vorzugsweise für eine Fluidleitung eines Fahrzeugs, mit einem ersten Bauteil und einem daran in einer Koppelstellung fluiddicht anzukoppelnden, zweiten Bauteil, wobei in dem ersten Bauteil eine Leckage-Öffnung vorgesehen ist, die mittels eines zugleich die Koppelstellung blockierenden Dichtmittels zu verschließen ist.

Derartige Verbindungsanordnungen sind beispielsweise aus DE 10 2015 205 767 A1 oder auch WO 2009/103995 A1 bekannt. Sie dienen dazu, Fluidleitungen miteinander derart zu verbinden, dass diese prüfbar fluiddicht sind. In ihrer Koppelstellung sind die beiden beteiligten Bauteile derart sicher miteinander gekoppelt, dass sie auch durch Vibrationen nicht voneinander getrennt werden. Ferner ist nur in der Koppelstellung mit zugleich eingesetztem Dichtmittel die für den Betrieb erforderliche Dichtigkeit des resultierenden Fluidsystems gewährleistet.

Bei komplexen Fluidsystemen sind zugleich Montagefehler weitestgehend zu vermeiden. Darüber hinaus besteht für die Montage solcher Fluidsysteme insbesondere im Kraftfahrzeugbereich ein besonders hoher Druck zu Kosteneinsparungen.

Eine Ladeluftführung dient bei Brennkraftmaschinen dazu, um Luft zu einem Turbolader bzw. Verdichter zu führen, der der Brennkraftmaschine zugeordnet ist. Bei derartigen Ladeluftführungen ist es bekannt ein Fluidventil einzusetzen, mittels dessen luft- bzw. gasführende Leitungen der Ladeluftführung wahlweise zu verschließen ist. Ein solches Fluidventil ist beispielsweise aus DE 10 2009 024 697 A1 bekannt.

Der Erfindung liegt die Aufgabe zugrunde, eine Verbindungsanordnung der eingangs genannten Art zu schaffen, die besonders prozesssicher zu montieren ist und zugleich über die Betriebsdauer hinweg eine dauerhaft nachprüfbar fluiddichte Verbindung zwischen den beteiligten Bauteilen herstellt.

Die Aufgabe ist erfindungsgemäß mit einer Verbindungsanordnung gelöst, vorzugsweise für eine Fluidleitung eines Fahrzeugs, mit einem ersten Bauteil und einem daran in einer Koppelstellung fluiddicht anzukoppelnden, zweiten Bauteil, wobei in dem ersten Bauteil eine Leckage-Öffnung vorgesehen ist, die mittels eines zugleich die Koppelstellung blockierenden Dichtmittels zu verschließen ist. Dabei ist gemäß der Erfindung das Dichtmittel in seiner die Koppelstellung blockierenden Dichtlage mittels eines Schraubbolzens gehalten.

Die Erfindung stellt eine Verbindungsanordnung bereit, bei der zum einen die beteiligten Bauteile mittels eines blockierenden Dichtmittels gegeneinander gesichert sind und zum anderen dieses Dichtmittel zusätzlich gezielt mittels eines Schraubbolzens hinsichtlich seiner Lage gesichert ist. Dabei kann während der Montage der Verbindungsanordnung der Schraubbolzen auf ordnungsgemäße Montage überwacht und geprüft werden. Nachfolgend kann während des Betriebs der Verbindungsanordnung das Dichtmittel mit Hilfe einer Dichtheitsprüfung auf seine ordnungsgemäße Dichtlage überwacht und geprüft werden. Die derartige Verbindungsanordnung schafft eine besonders betriebssichere und zugleich besonders kostengünstig herzustellende Gesamtanordnung.

Eine solche Gesamtanordnung ist insbesondere für eine Frischluftansaugung eines Turboladers an einem Zylinderkopfgehäuse einer Brennkraftmaschine besonders vorteilhaft. Die Ladeluftführung schafft dabei insbesondere eine Leitungsführung bzw. Verrohrung zwischen dem Turbolader, einem Kurbelwellengehäuse sowie einem Tankentlüftungssystem einer zugeordneten Brennkraftmaschine. Sie dient damit insbesondere zum Abführen von Blow-By-Gasen aus dem Kurbelwellengehäuse sowie von Kraftstoffdämpfen aus dem zugehörigen Kraftstofftank. Eine solche Leitungsführung wird auch als Verdichter-Eintrittsbogen bezeichnet.

Bei Kraftfahrzeugen ist es bekannt, eine Dichtigkeit von Fluidleitungssystemen mittels einer so genannten On-Board-Diagnose-Funktion im Fahrzeug (OBD) durchzuführen. Dabei wird ein definiertes Vakuum bzw. einen definierten Überdruck in dem Fluidleitungssystem aufgebaut. Eine Undichtigkeit kann somit erkannt werden, wenn das definierte Vakuum (durch Ziehen von sogenannter Falschluft) bzw. der definierte Überdruck (aufgrund von unerwünschtem Entweichen von Fluid) nicht in einer vorgegebenen Zeit erreicht werden kann. Die derartige Prüffunktion kann erfindungsgemäß vorteilhaft genutzt werden, um die ordnungsgemäße Montage der Verbindungsanordnung gemäß der Erfindung auch über deren Lebensdauer hinweg sicherzustellen.

Das erfindungsgemäße Dichtmittel ist vorzugsweise mittels des Schraubbolzens an dem ersten Bauteil gehalten. Derart gehaltert ist das Dichtmittel von dem Schraubbolzen zugleich in seine Dichtlage gedrängt und dort zurückgehalten.

Das Dichtmittel ist ferner vorteilhaft in einer Einsteckrichtung in die Leckage-Öffnung einzustecken und der Schraubbolzen ist dabei im Wesentlichen parallel zu der Einsteckrichtung einzuschrauben. Der Schraubbolzen wirkt dann in jene Richtung, in die auch das Dichtmittel zum Abdichten an der Leckage-Öffnung in das erste Bauteil zu drängen ist.

Das zweite Bauteil ist vorzugsweise in einer Koppelrichtung an das das erste Bauteil zu bewegen und dort in seiner Koppelstellung fluiddicht anzukoppeln. Ferner ist bevorzugt an dem ersten Bauteil das Dichtmittel in einer Einsteckrichtung in die Leckage-Öffnung einzustecken, wobei die Einsteckrichtung sich quer zu der Koppelrichtung erstreckend gestaltet ist. Mit der sich quer zur Koppelrichtung erstreckenden Einsteckrichtung ist das erste Bauteil von dem Dichtmittel besonders effektiv quer zu seiner Koppelrichtung gesperrt.

Das erste Bauteil ist vorteilhaft zylindrisch, vorzugsweise im Querschnitt kreisförmig gestaltet. Mit einem solchen Bauteil ist insbesondere ein blockförmiges Bauteil, wie etwa ein Gehäuse für ein Ventil oder andere hydraulische Funktionselemente herzustellen. Das zweite Bauteil ist vorteilhaft hohlzylindrisch, vorzugsweise im Querschnitt kreisringförmig gestaltet. Mit einem solchen Bauteil ist insbesondere eine rohrförmige Fluidleitung kostengünstig herzustellen.

Das Dichtmittel ist erfindungsgemäß ferner mit einem Dichtstift und einem sich quer dazu erstreckenden Arm gestaltet. Der Arm ermöglicht es, dass der Dichtstift vorteilhaft manuell gegriffen und insbesondere auch gedreht werden kann. Eine solche Drehbewegung bzw. Schwenkbewegung ist besonders beim Einführen und auch beim Entfernen des Dichtmittels in bzw. aus der Leckage-Öffnung von Vorteil.

Der Schraubbolzen ist vorteilhaft zum Halten des Dichtmittels in dessen die Koppelstellung blockierenden Dichtlage den Arm durchsetzend einzuschrauben. Der Schraubbolzen greift dann derart an dem Arm an, dass das Dichtmittel in Richtung zum ersten Bauteil gedrängt und zugleich auch in seiner Drehlage festgelegt ist.

An dem Arm ist vorzugsweise ferner eine vom Schraubbolzen durchsetzte Führungshülse vorgesehen, mittels der eine Bewegung des Arms in verschiedene Richtungen zu begrenzen ist. Mittels der Führungshülse kann beim Montieren der erfindungsgemäßen Verbindungsanordnung das Dichtmittel zusammen mit dem Arm an dem ersten Bauteil vormontiert und dann geführt in seine dichtende Endstellung bewegt werden. Bei dieser geführten Bewegung ist der Arm zusammen mit dem Dichtmittel vorzugsweise zunächst zu schwenken und dann in der Einsteckrichtung in die Leckage-Öffnung einzustecken. Die Führungshülse ist dazu vorzugsweise zum einen im Querschnitt kreisförmig und als eine Schwenkhülse gestaltet, und zum anderen in linearer Richtung als eine Schiebehülse gestaltet. Dabei ist die Dreh- bzw. Schwenkbewegung der Führungshülse vorzugsweise mittels zweier dortiger Endanschläge und die Schiebebewegung vorzugsweise mittels einer dortigen Längsnut begrenzt.

Das zweite Bauteil ist erfindungsgemäß bevorzugt ferner mit einer Blockier-Öffnung gestaltet, in die hinein das Dichtmittel in dessen die Koppelstellung blockierende Dichtlage zu bewegen ist. Die Blockier-Öffnung schafft eine optisch auch automatisiert gut erkennbare Markierung, die beim Montieren lediglich mit der Leckage-Öffnung auszurichten ist, um dadurch die lagegerechte Koppelstellung der beiden Bauteile herzustellen.

Gemäß oben genannter Vorteile ist die Erfindung entsprechend ferner auf eine Verwendung einer derartigen erfindungsgemäßen Verbindungsanordnung speziell zum fluiddichten Ankoppeln eines zweiten Bauteils an einem ersten Bauteil einer Fluidleitung eines Fahrzeugs gerichtet, vorzugsweise an einer Ladeluftführung eines Turboladers, und auf ein nachfolgendes Prüfen der Verbindungsanordnung auf ordnungsgemäße Ankopplung mittels einer fahrzeugeigenen Dichtheitsprüfung.

Nachfolgend wird ein Ausführungsbeispiel der erfindungsgemäßen Lösung anhand der beigefügten, schematischen Zeichnungen näher erläutert. Es zeigt:
Fig. 1 eine perspektivische Ansicht eines ersten Ausführungsbeispiels einer erfindungsgemäßen Verbindungsanordnung einer Ladeluftführung in nicht gekoppelter Stellung,
Fig. 2 den Schnitt II - II gemäß Fig. 1 in Koppelstellung,
Fig. 3 eine perspektivische Ansicht eines zweiten Ausführungsbeispiels einer erfindungsgemäßen Verbindungsanordnung einer Ladeluftführung in nicht gekoppelter Stellung,
Fig. 4 die Ansicht IV gemäß Fig. 3 in gekoppelter, aber nicht blockierter Stellung und
Fig. 5 die Ansicht IV in gekoppelter sowie blockierter Stellung.

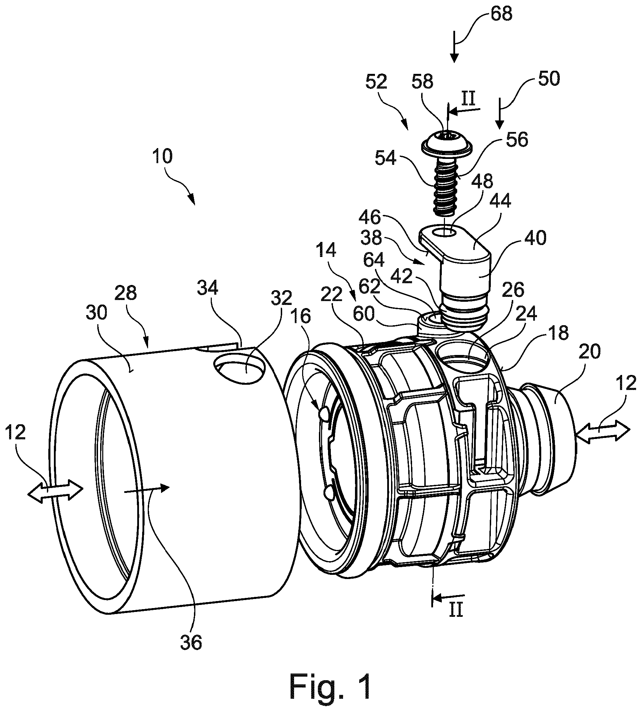

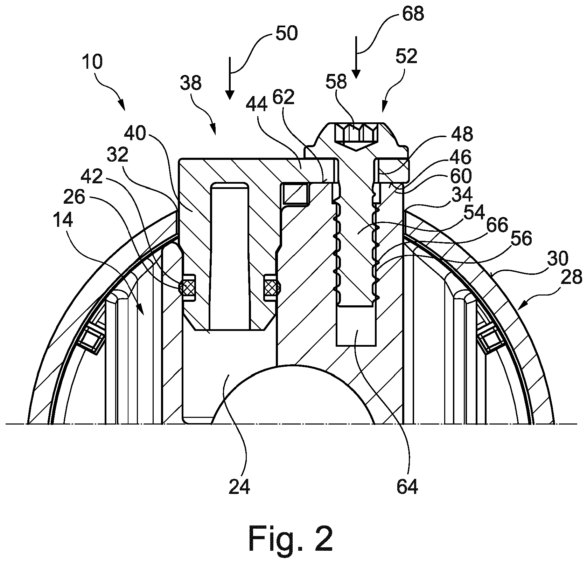

In Fig. 1 und Fig. 2 ist ein Teil einer Verbindungsanordnung 10 einer weiter nicht dargestellten Ladeluftführung veranschaulicht. Die Verbindungsanordnung 10 bildet einen Teil einer Fluidleitung 12 der Ladeluftführung, die durch die Verbindungsanordnung 10 hindurchführt und hier mit Hilfe zweier Pfeile veranschaulicht ist.

Die Verbindungsanordnung 10 umfasst ein erstes Bauteil 14, das im Wesentlichen zylindrisch und im Querschnitt kreisförmig als Gehäuse ausgebildet ist. In dem Bauteil 14 befindet sich ein Innenraum 16, der an einer Seite offen und an seiner axial gegenüberliegenden Seite mittels einer Stirnwand 18 begrenzt ist. An der Stirnwand 18 befindet sich vom Innenraum 16 abgewandt ein stirnseitiger, zentraler Anschluss 20. Radial außen ist der Innenraum 16 von einer Ringwand 22 begrenzt.

In der Ringwand 22 befindet sich an deren zur Stirnwand 18 gewandtem Endbereich eine kreisrunde Leckage-Öffnung 24, in deren Innenseite ein Dichtsitz 26 ausgebildet ist.

Ferner umfasst die Verbindungsanordnung 10 ein zweites Bauteil 28, das vorliegend als Rohr im Wesentlichen hohlzylindrisch und im Querschnitt kreisringförmig gestaltet ist. Das derart rohrförmige, zweite Bauteil 28 weist eine äußere Mantelfläche 30 auf, an deren zum ersten Bauteil 14 gewandten Endbereich eine kreisrunde und die Mantelfläche 30 durchsetzende Blockier-Öffnung 32 ausgebildet ist. Neben der Blocker-Öffnung 32 ist in der Mantelfläche 30 ferner eine die Mantelfläche 30 ebenfalls durchsetzende Aussparung 34 ausgebildet, die sich bis an den stirnseitigen Rand der Mantelfläche 30 erstreckt.

Das zweite Bauteil 28 ist in eine Koppelrichtung 36 auf das erste Bauteil 14 aufzuschieben, wodurch dessen Mantelfläche 30 derart über die Ringwand 22 geschoben wird, dass die Blockier-Öffnung 32 deckungsgleich mit der Leckage-Öffnung 24 zu liegen kommt. Die beiden Bauteile 14 und 28 befinden sich dann in der so genannten Koppelstellung.

An der Verbindungsanordnung 10 ist ferner ein Dichtmittel 38 vorgesehen, das mit einem zylindrischen Dichtstift 40 gestaltet ist, auf dem ein Dichtring 42 angeordnet ist. An einem Endbereich des zylindrischen Dichtstifts 40 steht von diesem radial ein flacher Arm 44 ab, der eine Arm-Unterseite 46 aufweist und in dem sich am vom Dichtstift 40 abgewandten Endbereich eine den Arm 44 durchsetzende Arm-Öffnung 48 befindet.

Der Dichtstift 40 ist in der Koppelstellung des ersten Bauteils 14 und des zweiten Bauteils 28 in einer Einsteckrichtung 50 durch die Blockier-Öffnung 32 hindurch in die Leckage-Öffnung 24 einzustecken, bis der Dichtring 42 am Dichtsitz 26 fluiddicht zum Anliegen kommt. Dabei kann der Dichtstift 40 mittels des Arms 44 eingepresst und auch gedreht werden.

Schließlich befindet sich an der Verbindungsanordnung 10 noch ein Schraubbolzen 52, der mit einem Bolzenschaft 54 mit Schaftgewinde 56 und einem Bolzenkopf 58 versehen ist.

An dem ersten Bauteil 14 befindet sich in Umfangsrichtung neben der Leckage-Öffnung 24 ein Ansatz 60 mit einer ebenen Ansatz-Oberseite 62, der in der Koppelstellung in der Aussparung 34 zu liegen kommt und so eine Lage- und insbesondere Verdreh-Sicherung für das erste Bauteil 14 auf dem zweiten Bauteil 28 darstellt. In dem Ansatz 60 ist eine Einschraub-Öffnung 64 mit einem Innengewinde 66 ausgebildet.

Der Schraubbolzen 52 ist in der Koppelstellung in die Einschraub-Öffnung 64 in eine Einschraubrichtung 68 einzuschrauben. Die Einschraubrichtung 68 erstreckt sich dabei parallel zu der Einsteckrichtung 50. Der Schraubbolzen 52 ist so weit einzuschrauben, bis sein Bolzenkopf 58 am Arm 44 zum Anliegen kommt und diesen zusammen mit seiner Arm-Unterseite 46 gegen die Ansatz-Oberseite 62 drängt. In dieser eingeschraubten Lage des Schraubbolzens 52 ist das Dichtmittel 38 die Leckage-Öffnung 24 fluiddicht abdichtend und zugleich die Blockier-Öffnung 32 sperrend ortsfest gehalten. Auf diese Weise kann auch während der gesamten Betriebsdauer der zugehörigen Ladeluftführung sichergestellt werden, dass eine ordnungsgemäße und dichte Verbindung zwischen den beiden Bauteilen 14 und 28 geschaffen ist. Diese Verbindung kann zugleich mittels einer fahrzeugeigenen Dichtheitsprüfung, einer so genannten On-Board-Diagnose-Funktion (OBD) überwacht werden. Sobald es aufgrund einer Lageänderung des Dichtmittels 38 an der Dichtstelle von Dichtring 42 zu Dichtsitz 26 auch nur zu einer kleinen Undichtigkeit kommen sollte, würde diese von der Dichtheitsprüfung sofort erkannt werden.

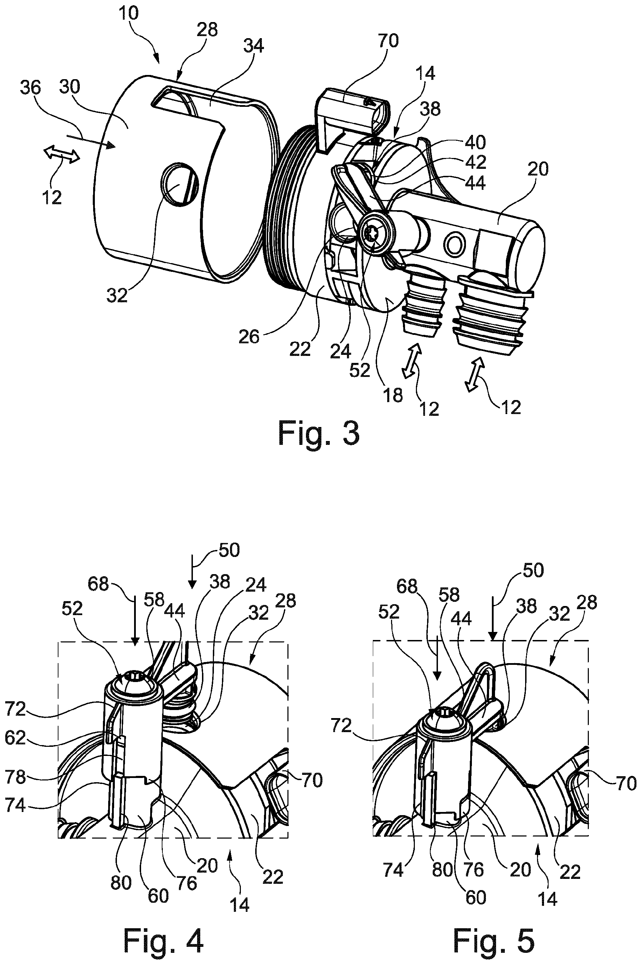

Die Fig. 3 bis 5 zeigen ein weiteres Ausführungsbeispiel einer Verbindungsanordnung 10 einer Ladeluftführung, bei dem die Aussparung 34 an dem zweiten Bauteil 28 in Koppelrichtung 36 länger ausgebildet ist. In diese derart längliche Aussparung 34 ist beim Koppeln der beiden Bauteile 14 und 28 ein gewinkelter und vom ersten Bauteil 14 abstehender Steckeranschluss 70 einzuführen. Mit der derartigen Führung des Steckeranschlusses 70 in der Aussparung 34 ist nach dem Koppeln das zweite Bauteil 28 hinsichtlich seiner relativen Lage zum ersten Bauteil 14 festgelegt. Zugleich ist die Blockier-Öffnung 32 des zweiten Bauteils 28 lagegenau über der Leckage-Öffnung 24 des ersten Bauteils 14 positioniert.

Der bei dem Ausführungsbeispiel gemäß Fig. 1 und 2 vorgesehene Ansatz 60 ist bei dem Ausführungsbeispiel gemäß Fig. 3 bis 5 in Koppelrichtung 36 betrachtet weiter hinten an dem ersten Bauteil 14 und damit außerhalb des zweiten Bauteils 28 angeordnet. Der dortige Ansatz 60 ist ebenfalls mit einer Einschraub-Öffnung 64 zum Einschrauben eines Schraubbolzens 52 versehen.

Ferner ist auch an diesem Ansatz 60 ein Dichtmittel 38 mit einem Arm 44 und einer Arm-Öffnung 48 vorgesehen. Die Arm-Öffnung 48 dieses Ausführungsbeispiels ist allerdings mit einer Führungshülse 72 umgeben, durch die hindurch der Schraubbolzen 52 einzuschrauben ist. Der Ansatz 60 gemäß den Fig. 4 bis 5 ist zudem höher gestaltet und seine Ansatz-Oberseite 62 ragt bis in die Führungshülse 72 hinein.

Darüber hinaus sind an der Führungshülse 72 an deren dem ersten Bauteil 14 zugewandten Endbereich ein erster Endanschlag 74 sowie ein zweiter Endanschlag 76 ausgebildet. In Einschraubrichtung 68 betrachtet ist die Führungshülse 72 von einer Längsnut 78 durchsetzt.

Als Gegenstück zu diesen Endanschlägen 74 und 76 sowie der Längsnut 78 befindet sich an dem Ansatz 60 in Einschraubrichtung 68 ein passgenauer Längssteg 80. Das vom ersten Bauteil 14 abgewandte Ende dieses Längsstegs 80 wirkt mit den beiden Endanschlägen 74 und 76 derart zusammen, dass eine Dreh- bzw. Schwenkbewegung der Führungshülse 72 zusammen mit dem Arm 44 und dem Dichtmittel 38 über einen vordefinierten Winkelbereich möglich, dass darüber hinaus aber eine solche Dreh- bzw. Schwenkbewegung der Führungshülse 72 begrenzt bzw. nicht möglich ist (siehe Fig. 4).

Ferner ist das vom ersten Bauteil 14 abgewandte Endes des Längsstegs 80 beim Blockieren der beiden Bauteile 14 und 28 mittels des Dichtmittels 38 derart in die Längsnut 78 einzuführen, dass der Längssteg 80 vollständig in die Längsnut 78 eintritt, während zugleich das Dichtmittel 38 gemäß der parallelen Einsteckrichtung 50 in die Leckage-Öffnung 24 und an den dortigen Dichtsitz 26 geführt wird (siehe Fig. 5).

### Bezugszeichen

- 10: Verbindungsanordnung einer Ladeluftführung
- 12: Fluidleitung
- 14: erstes Bauteil, zylindrisch, im Querschnitt kreisförmig, als Gehäuse
- 16: Innenraum
- 18: Stirnwand
- 20: stirnseitiger Anschluss
- 22: Ringwand
- 24: Leckage-Öffnung
- 26: Dichtsitz
- 28: zweites Bauteil, hohlzylindrisch, im Querschnitt kreisringförmig, als Rohr
- 30: äußere Mantelfläche
- 32: Blockier-Öffnung
- 34: Aussparung
- 36: Koppelrichtung
- 38: Dichtmittel
- 40: Dichtstift
- 42: Dichtring
- 44: Arm
- 46: Arm-Unterseite
- 48: Arm-Öffnung
- 50: Einsteckrichtung
- 52: Schraubbolzen
- 54: Bolzenschaft
- 56: Schaftgewinde
- 58: Bolzenkopf
- 60: Ansatz
- 62: Ansatz-Oberseite
- 64: Einschraub-Öffnung
- 66: Innengewinde
- 68: Einschraubrichtung
- 70: Steckeranschluss
- 72: Führungshülse
- 74: Endanschlag
- 76: Endanschlag
- 78: Längsnut
- 80: Längssteg

## Patentansprüche

1. Verbindungsanordnung (10), vorzugsweise für eine Fluidleitung (12) eines Fahrzeugs, mit einem ersten Bauteil (14) und einem daran in einer Koppelstellung fluiddicht anzukoppelnden, zweiten Bauteil (28) und einem Dichtmittel (38), wobei in dem ersten Bauteil (14) eine Leckage-Öffnung (24) vorgesehen ist, die mittels des zugleich die Koppelstellung blockierenden Dichtmittels (38) zu verschließen ist,
wobei das Dichtmittel (38) in seiner die Koppelstellung blockierenden Dichtlage mittels eines Schraubbolzens (52) gehalten ist,
**dadurch gekennzeichnet, dass** das Dichtmittel (38) mit einem Dichtstift (40) und einem sich quer dazu erstreckenden Arm (44) gestaltet ist.

2. Verbindungsanordnung nach Anspruch 1,
**dadurch gekennzeichnet, dass** das Dichtmittel (38) mittels des Schraubbolzens (52) an dem ersten Bauteil (14) gehalten ist.

3. Verbindungsanordnung nach Anspruch 1 oder 2,
**dadurch gekennzeichnet, dass** das Dichtmittel (38) in einer Einsteckrichtung (50) in die Leckage-Öffnung (24) einzustecken ist und der Schraubbolzen (52) im Wesentlichen parallel zu der Einsteckrichtung (50) einzuschrauben ist.

4. Verbindungsanordnung nach einem der Ansprüche 1 bis 3,
**dadurch gekennzeichnet, dass** das zweiten Bauteil (28) in einer Koppelrichtung (36) an das erste Bauteil (14) zu bewegen und dort in seiner Koppelstellung fluiddicht anzukoppeln ist und an dem ersten Bauteil (14) das Dichtmittel (38) in einer Einsteckrichtung (50) in die Leckage-Öffnung (24) einzustecken ist, wobei die Einsteckrichtung (50) sich quer zu der Koppelrichtung (36) erstreckend gestaltet ist.

5. Verbindungsanordnung nach einem der Ansprüche 1 bis 4,
**dadurch gekennzeichnet, dass** erste Bauteil (14) zylindrisch, vorzugsweise im Querschnitt kreisförmig gestaltet ist, und dass das zweite Bauteil (28) hohlzylindrisch, vorzugsweise im Querschnitt kreisringförmig gestaltet ist.

6. Verbindungsanordnung nach einem der Ansprüche 1 bis 5,
**dadurch gekennzeichnet, dass** der Schraubbolzen (52) zum Halten des Dichtmittels (38) in dessen die Koppelstellung blockierenden Dichtlage den Arm (44) durchsetzend einzuschrauben ist.

7. Verbindungsanordnung nach Anspruch 6,
**dadurch gekennzeichnet, dass** an dem Arm (44) eine vom Schraubbolzen (52) durchsetzte Führungshülse vorgesehen ist, mittels der eine Bewegung des Arms (44) zu begrenzen ist.

8. Verbindungsanordnung nach einem der Ansprüche 1 bis 7,
**dadurch gekennzeichnet, dass** das zweite Bauteil (28) mit einer Blockier-Öffnung (32) gestaltet ist, in die hinein das Dichtmittel (38) in dessen die Koppelstellung blockierende Dichtlage zu bewegen ist.

9. Verwendung einer Verbindungsanordnung (10) nach einem der Ansprüche 1 bis 8 zum fluiddichten Ankoppeln eines zweiten Bauteils (28) an einem ersten Bauteil (14) einer Fluidleitung (12) eines Fahrzeugs, vorzugsweise an einer Ladeluftführung eines Turboladers, und Prüfen der Verbindungsanordnung (10) auf ordnungsgemäße Ankopplung mittels einer fahrzeugeigenen Dichtheitsprüfung.

## Claims

1. Connection arrangement (10), preferably for a fluid line (12) of a vehicle, having a first component (14) and a second component (28) which is to be coupled therewith in a fluid-tight manner in a coupling position, and a sealing means (38), wherein there is provided in the first component (14) a leakage opening (24) which is to be closed by means of the sealing means (38), which at the same time blocks the coupling position,
wherein the sealing means (38) is held in its sealing position blocking the coupling position by means of a bolt (52),
**characterised in that** the sealing means (38) is formed by a sealing pin (40) and an arm (44) extending transverse thereto.

2. Connection arrangement according to claim 1,
**characterised in that** the sealing means (38) is held on the first component (14) by means of the bolt (52).

3. Connection arrangement according to claim 1 or 2,
**characterised in that** the sealing means (38) is to be inserted into the leakage opening (24) in an insertion direction (50), and the bolt (52) is to be screwed in substantially parallel to the insertion direction (50).

4. Connection arrangement according to any one of claims 1 to 3,
**characterised in that** the second component (28) is to be moved to the first component (14) in a coupling direction (36) and is to be coupled there in its coupling position in a fluid-tight manner, and at the first component (14) the sealing means (38) is to be inserted into the leakage opening (24) in an insertion direction (50), wherein the insertion direction (50) is configured to extend transverse to the coupling direction (36).

5. Connection arrangement according to any one of claims 1 to 4,
**characterised in that** the first component (14) is cylindrical, preferably circular in cross section, and **in that** the second component (28) is hollow cylindrical, preferably toroidal in cross section.

6. Connection arrangement according to any one of claims 1 to 5,
**characterised in that** the bolt (52), for holding the sealing means (38) in its sealing position blocking the coupling position, is to be screwed in so that it passes through the arm (44).

7. Connection arrangement according to claim 6,
**characterised in that** there is provided on the arm (44) a guide sleeve through which the bolt (52) passes and by means of which a movement of the arm (44) is to be limited.

8. Connection arrangement according to any one of claims 1 to 7,
**characterised in that** the second component (28) is configured with a blocking opening (32) into which the sealing means (38) is to be moved in its sealing position blocking the coupling position.

9. Use of a connection arrangement (10) according to any one of claims 1 to 8 for the fluid-tight coupling of a second component (28) to a first component (14) of a fluid line (12) of a vehicle, preferably to a charge air duct of a turbocharger, and for checking the connection arrangement (10) for correct coupling by means of an on-board tightness test.

## Revendications

1. Agencement de raccordement (10), de préférence pour une conduite de fluide (12) d'un véhicule, avec un premier composant (14) et un deuxième composant (28) à y raccorder de façon étanche aux fluides dans une position de couplage et avec un moyen d'étanchéification (38), dans lequel une ouverture de fuite (24) est prévue dans le premier composant (14) qui se ferme à l'aide du moyen d'étanchéification (38) bloquant en même temps la position de couplage ;
le moyen d'étanchéification (38) étant maintenu dans sa position étanche bloquant la position de couplage à l'aide d'un boulon à vis (52) ;
**caractérisé en ce que** le moyen d'étanchéification (38) est réalisé avec une tige étanche (40) et un bras (44) s'étendant transversalement à elle.

2. Agencement de raccordement selon la revendication 1,
**caractérisé en ce que** le moyen d'étanchéification (38) est maintenu au niveau du premier composant (14) à l'aide du boulon à vis (52).

3. Agencement de raccordement selon la revendication 1 ou 2,
**caractérisé en ce que** le moyen d'étanchéification (38) doit être enfiché dans une direction d'enfichage (50) dans l'ouverture de fuite (24) et que le boulon à vis (52) doit être vissé pour l'essentiel parallèlement au direction d'enfichage (50).

4. Agencement de raccordement selon l'une quelconque des revendications 1 à 3,
**caractérisé en ce que** le deuxième composant (28) doit être déplacé dans une direction de couplage (36) au niveau du premier composant (14) et doit y être raccordé de façon étanche aux fluides dans sa position de couplage et que le moyen d'étanchéification (38) doit être enfiché au niveau du premier composant (14) dans une direction d'enfichage (50), dans l'ouverture de fuite (24), la direction d'enfichage (50) étant agencée de façon à s'étendre transversalement à la direction de couplage (36).

5. Agencement de raccordement selon l'une quelconque des revendications 1 à 4,
**caractérisé en ce que** le premier composant (14) est agencé de façon cylindrique, de préférence en section transversale en forme de cercle et que le deuxième composant (28) est agencé à la façon d'un cylindre creux, de préférence en forme de couronne circulaire en section transversale.

6. Agencement de raccordement selon l'une quelconque des revendications 1 à 5,
**caractérisé en ce que** le boulon à vis (52) doit être vissé de façon à traverser le bras (44) pour maintenir le moyen d'étanchéification (38) dans sa position étanche bloquant la position de couplage.

7. Agencement de raccordement selon la revendication 6,
**caractérisé en ce qu'**une douille de guidage traversée par le boulon à vis (52) est prévue au niveau du bras (44), ladite douille servant à limiter un mouvement du bras (44).

8. Agencement de raccordement selon l'une quelconque des revendications 1 à 7,
**caractérisé en ce que** le deuxième composant (28) est réalisé avec une ouverture de blocage (32) dans laquelle le moyen d'étanchéification (38) doit être déplacé dans sa position étanche bloquant la position de couplage.

9. Utilisation d'un agencement de raccordement (10) selon l'une quelconque des revendications 1 à 8, pour le couplage étanche aux fluides d'un deuxième composant (28) au niveau d'un premier composant (14) d'une conduite de fluide (12) d'un véhicule, de préférence au niveau d'un guidage d'air de charge d'un turbocompresseur et vérification de l'agencement de raccordement (10) pour en vérifier le couplage adéquat au moyen d'un contrôle d'étanchéité propre au véhicule.
